# DEMANDE DE BREVET EUROPEEN

(11) **EP 3 907 668 A1**
(43) Date de publication de la demande: **10.11.2021**
(21) Numéro de dépôt: 21168752.0
(22) Date de dépôt: 16.04.2021
(51) Int. Cl.: G06N 3/063, G06F 12/02, G06N 3/04

(54) **PROCÉDÉ D ALLOCATION DE DONNÉES INTERMÉDIAIRES D'UN RÉSEAU DE NEURONES ARTIFICIEL**

(30) Priorité: 30.04.2020 FR 2004337
(71) Demandeur: STMicroelectronics (Rousset) SAS, 13790 Rousset (FR); STMicroelectronics S.r.l., 20864 Agrate Brianza (MB) (IT)
(72) Inventeur: FOLLIOT, Laurent, 06620 GOURDON (FR); PLEBANI, Emanuele, 24039 SOTTO IL MONTE GIOVANNI XXIII (IT); FALCHETTO, Mirko, 20010 Ossona (MI) (IT)
(74) Mandataire: Casalonga

(57) **Abrégé**

Selon un aspect, il est proposé un procédé de détermination, pour une allocation mémoire, de placements dans une zone mémoire de blocs de données générés par un réseau de neurones, le procédé comprenant :
- une élaboration (21) d'une suite initiale de placements des blocs, chaque placement étant sélectionné (22) parmi plusieurs placements possibles, ladite suite initiale étant définie comme une suite candidate,
- une élaboration (24) d'au moins une suite de placements modifiée à partir d'un remplacement d'un placement donné de ladite suite initiale par un placement non sélectionné mémorisé,
si la taille envisagée de ladite zone mémoire obtenue par cette suite modifiée est inférieure à celle de ladite zone mémoire de la suite candidate, alors cette suite modifiée devient la suite candidate,
les placements des blocs pour l'allocation étant ceux de la suite de placements définie comme suite candidate une fois que chaque suite modifiée a été élaborée.

## Description

Des modes de réalisation et de mise en œuvre concernent les réseaux de neurones artificiels, et plus particulièrement l'allocation de mémoire lors de l'exécution de ces réseaux de neurones.

Les réseaux de neurones artificiels comprennent généralement une succession de couches de neurones.

Les réseaux de neurones artificiels prennent un jeu de données en entrée de la première couche et délivre un résultat final en sortie de la dernière couche.

Chaque couche disposée entre les couches du réseau de neurones jusqu'à la dernière permet de générer en sortie de la couche un bloc de données intermédiaires, représentatives de résultats intermédiaires. Ces blocs de données intermédiaires sont pris en entrée d'autres couches qui génèrent à partir de ces blocs de données intermédiaires leurs propres bloc de données intermédiaires.

Les réseaux de neurones artificiels peuvent être mis en œuvre par des circuits intégrés tels que des microcontrôleurs.

Lors de l'exécution du réseau de neurones, les données intermédiaires sont stockées temporairement dans une zone mémoire, dite zone mémoire globale, d'une mémoire du circuit intégré. Or, certains circuits intégrés présentent une mémoire de taille limitée.

Il est ainsi important de limiter la taille requise pour le stockage des données intermédiaires générées par les couches du réseau de neurones.

Afin de limiter la taille requise pour le stockage des données intermédiaires, il convient de prévoir un procédé permettant de stocker temporairement les blocs de données intermédiaires selon des placements optimisés dans la zone mémoire globale.

Les solutions d'allocation connues ne permettent pas toujours d'obtenir une allocation optimale de la mémoire. En particulier, ces solutions d'allocation ne permettent pas toujours d'obtenir une taille de zone mémoire globale optimisée.

Par exemple, une solution connue consiste à placer les blocs de données intermédiaires uniquement dans des zones libres de la zone mémoire globale.

Une telle solution peut conduire à une fragmentation excessive de la mémoire, conduisant ainsi à un gaspillage de mémoire si les zones libres de la mémoire deviennent trop petites lors de l'exécution du réseau de neurones.

Une autre solution connue consiste en une allocation de superposition dans laquelle, pour chaque couche, le bloc de données intermédiaires généré par cette couche peut écraser dans la zone mémoire globale au moins une partie du bloc de données intermédiaires pris en entrée de cette même couche.

Une telle solution présente l'inconvénient de fonctionner uniquement pour les réseaux de neurones de type séquentiel. Les réseaux de neurones de type séquentiel sont des réseaux de neurones pour lesquelles le bloc de données intermédiaires généré par chaque couche est pris en entrée uniquement par la couche succédant directement cette dernière couche.

Une telle solution n'est donc pas adaptée pour les réseaux de neurones pour lesquels les données de sortie de certaines couches sont prises en entrée de plusieurs couches. En effet, ces données de sortie ne peuvent être écrasées après avoir été utilisées par une couche suivante alors que d'autres couches les nécessitent.

Il existe donc un besoin de proposer un procédé permettant de réduire la taille mémoire nécessaire pour le stockage des blocs de données intermédiaires générés par les couches d'un réseau de neurones.

Selon un aspect, il est proposé un procédé de détermination, pour une allocation mémoire, de placements dans une zone mémoire globale de blocs de données, dits blocs de données intermédiaires, générés par chacune des couches d'un réseau de neurones artificiel, le procédé comprenant :
- une définition de plusieurs placements possibles des blocs de données intermédiaires de chaque couche dans la zone mémoire globale,
- une élaboration d'une suite initiale de placements des blocs de données intermédiaires de chaque couche depuis la première couche jusqu'à la dernière couche du réseau de neurones, chaque placement de la suite initiale étant sélectionné parmi lesdits plusieurs placements possibles du bloc de données intermédiaires à placer, ladite suite initiale permettant de définir une taille envisagée de ladite zone mémoire globale, ladite suite initiale étant définie comme une suite candidate,
- une mémorisation des placements non sélectionnés pour les blocs de données intermédiaires de chaque couche,
- une élaboration d'au moins une suite de placements modifiée par rapport à ladite suite initiale à partir d'un placement donné de ladite suite initiale, l'élaboration de cette suite modifiée comprenant une modification du placement donné par un placement non sélectionné mémorisé,
si la taille envisagée de ladite zone mémoire globale obtenue par cette suite modifiée est inférieure à la taille envisagée de ladite zone mémoire globale de la suite candidate, alors cette suite modifiée devient la suite candidate,
les placements des blocs de données intermédiaires pour l'allocation mémoire étant ceux de la suite de placements, dite suite choisie, définie comme la suite candidate une fois que chaque suite modifiée a été élaborée.

Certains placements possibles des blocs de données intermédiaires peuvent entraîner une augmentation de la taille de la zone mémoire globale.

Un tel procédé permet d'essayer plusieurs suites de placements de blocs de données intermédiaires de façon à déterminer quelle suite de placements permet d'obtenir une taille envisagée de la zone mémoire globale, par exemple la taille la plus étroite possible.

Le nombre de suites testées, y compris la suite initiale, peut être supérieur ou égal à deux.

Un tel procédé permet ainsi par exemple de trouver le meilleur placement pour chaque bloc de données intermédiaires pour minimiser la taille de la zone mémoire globale.

En minimisant la taille de la zone mémoire globale, un tel procédé permet l'utilisation d'un circuit intégré présentant une mémoire de taille réduite. Un tel procédé permet ainsi par exemple l'utilisation de circuits intégrés peu coûteux.

La taille de la zone mémoire globale est définie dynamiquement en fonction des placements sélectionnés lors de l'élaboration de la suite de placements. En particulier, lorsqu'un placement sélectionné d'un bloc de données intermédiaires nécessite une augmentation de la taille de la zone mémoire globale, alors la zone mémoire globale est augmentée.

Il peut être préférable d'élaborer toutes les suites modifiées possibles, c'est-à-dire d'essayer toutes les suites de placements possibles, afin d'obtenir la suite de placements permettant une optimisation maximale de la taille de la zone mémoire globale.

Néanmoins, il est également possible de limiter le nombre de suite (s) modifiée (s) à élaborer de façon à accélérer une exécution d'un tel procédé de détermination par une unité de traitement. La suite de placements choisie pour l'allocation mémoire ne sera peut-être pas la plus optimisée mais sera tout de même la suite la plus optimisée parmi les suites de placements élaborées.

Dans un mode de réalisation avantageux, un ordre de priorité est attribué à chaque placement possible pour chaque bloc de données intermédiaires, la sélection du placement de chaque bloc de données intermédiaires pour l'élaboration de la suite initiale étant effectuée selon l'ordre de priorité du placement.

L'attribution d'un ordre de priorité permet de réduire le nombre de suite de placements à élaborer pour obtenir la suite de placements permettant de minimiser la taille envisagée de la zone mémoire globale.

L'attribution d'un ordre de priorité permet de réduire le temps d'exécution du procédé.

De préférence, les placements non sélectionnés pour la suite initiale sont mémorisés de bas en haut dans une pile selon leur ordre de priorité pour chaque bloc de données intermédiaires.

Cette pile peut présenter une taille limitée. Une pile de taille limitée permet d'accélérer l'exécution du procédé.

Avantageusement, chaque suite modifiée est élaborée de sorte qu'elle conserve les mêmes placements que ceux de la suite initiale jusqu'au placement associé au même bloc de données intermédiaires que le placement placé en haut de la pile. Ce placement de la suite initiale est remplacé par le placement placé en haut de la pile qui est ensuite supprimé de la pile. Les placements des blocs de données intermédiaires des couches suivantes de la suite modifiée sont sélectionnés parmi les placements possibles pour ces blocs de données intermédiaires. Les placements non sélectionnés sont mémorisés dans la pile.

Dans un mode de réalisation avantageux, des suites modifiées sont élaborées jusqu'à ce que la pile soit vide.

Avantageusement, pour chaque placement mémorisé dans la pile est associée la taille de la zone mémoire globale qui aurait pu être obtenue par ce placement s'il avait été sélectionné parmi les différents placement possible d'un bloc de données intermédiaires.

De préférence, le procédé comprend, avant chaque élaboration d'une suite modifiée, une comparaison entre la taille de zone mémoire globale associée à chaque placement de la pile et la taille envisagée de la zone mémoire globale obtenue pour la suite candidate, puis une suppression dans la pile des placements associés à une taille de zone mémoire globale supérieure à ladite taille envisagée.

Cette suppression permet d'éviter de construire des suites modifiées qui ne pourront être choisis comme suite candidate. Ainsi, cette suppression permet d'accélérer le procédé de détermination et de libérer de la place dans la pile si celle-ci a une taille limitée.

Préférablement, le procédé comprend, avant chaque élaboration d'une suite modifiée, une organisation des placements de la pile associés à un même bloc de données intermédiaires selon la taille de zone mémoire globale qui leur est associée et selon un ordre d'exécution de ces placements.

Cette organisation permet d'obtenir plus rapidement la meilleure suite de placements.

Avantageusement, une zone de la zone mémoire globale choisie pour un placement d'un bloc de données intermédiaires est considérée comme libérée dès que les placements de blocs de données de toutes les couches prenant en entrée le bloc de données intermédiaires placé dans ladite zone ont été sélectionnés.

Dans un mode de réalisation avantageux, un placement défini d'un bloc de données intermédiaires consiste à placer le bloc de données intermédiaires dans une zone libre de la zone mémoire globale.

Un tel placement permet d'éviter d'augmenter la taille de zone mémoire globale.

Dans un mode de réalisation avantageux, un placement défini d'un bloc de données intermédiaires généré par une couche consiste à superposer ce bloc de données intermédiaires sur un bloc de données intermédiaires pris en entrée de cette même couche.

La superposition d'un bloc de données intermédiaires généré par une couche sur un bloc de données intermédiaires pris en entrée de cette même couche entraîne un écrasement au moins partiel de ce bloc de données intermédiaires pris en entrée de la couche. Ainsi, un tel placement est utilisé lorsque lesdites données du bloc de données pris en entrée ne sont pas réutilisées lors de l'exécution du réseau de neurones. Un tel placement peut également permettre d'éviter d'augmenter la taille de la zone mémoire globale.

Dans un mode de réalisation avantageux, un placement défini d'un bloc de données intermédiaires consiste à augmenter la taille mémoire de la zone mémoire globale pour insérer le bloc de données intermédiaires. La taille de la zone mémoire globale peut être augmentée de façon à permettre un placement d'un bloc complet de données intermédiaires dans la nouvelle partie de la zone mémoire globale résultant de l'augmentation de la taille de la zone mémoire globale. En variante, il est possible d'augmenter la zone mémoire globale de façon à permettre un placement d'un bloc de données en superposant une partie du bloc de données intermédiaires sur des données intermédiaires déjà stockées dans la zone mémoire globale, ces données intermédiaires étant alors écrasées, et en stockant le reste du bloc de données intermédiaires dans la nouvelle partie de la zone mémoire globale résultant de l'augmentation de la taille de la zone mémoire globale.

Selon un autre aspect, il est proposé un procédé d'allocation d'une taille mémoire globale, dans lequel ladite taille mémoire globale est choisie pour être égale à la taille envisagée obtenue par la suite choisie définie par un procédé de détermination de placements tel que décrit précédemment, puis la mémoire est allouée selon les placements successifs déterminés.

Selon un autre aspect, il est proposé un circuit intégré configuré pour recevoir un réseau de neurones artificiel multicouches, et comprenant :
- une mémoire configurée pour mémoriser des blocs de données intermédiaires générés par chacune des couches du réseau de neurones dans une zone, dite zone mémoire globale, et
- une unité de traitement configurée pour mettre en œuvre un procédé, tel que décrit précédemment, de détermination de placements desdits blocs de données intermédiaires dans ladite zone mémoire globale, puis un procédé d'allocation tel que décrit précédemment lors d'une exécution du réseau de neurones.

D'autres avantages et caractéristiques de l'invention apparaîtront à l'examen de la description détaillée de modes de mise en œuvre et de réalisation, nullement limitatifs, et des dessins annexés sur lesquels :
[Fig 1],
[Fig 2]
[Fig 3a]
[Fig 3b]
[Fig 3c]
[Fig 4a]
[Fig 4b]
[Fig 4c]
[Fig 4d]
[Fig 5a]
[Fig 5b]
[Fig 5c]
[Fig 5d]
[Fig 6]
[Fig 7a]

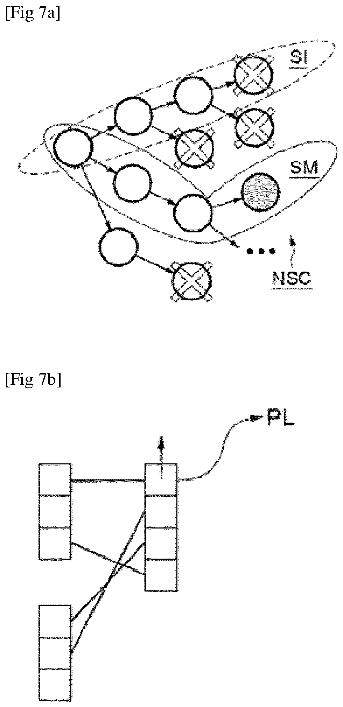

[Fig 7b] illustrent schématiquement des modes de réalisation et de mise en œuvre de l'invention.

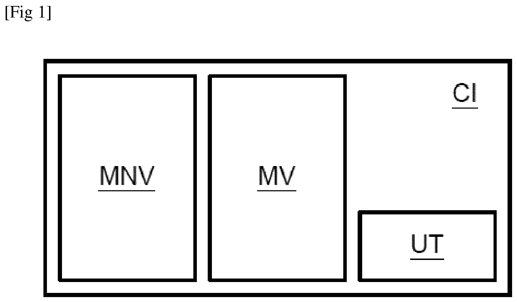

La figure 1 représente un circuit intégré CI. Ce circuit intégré CI peut-être par exemple un microcontrôleur, un générateur de code ou tout autre objet pouvant contenir une architecture logicielle embarquée ou matérielle.

Le circuit intégré CI est configuré pour mettre en œuvre un réseau de neurones. Le réseau de neurones comprend une succession de couches. Chaque couche, hormis la dernière couche, est configurée pour générer en sortie de la couche un bloc de données intermédiaires, à partir d'un bloc de données reçu en entrée de cette couche. Ce bloc d'entrée reçu en entrée peut être un bloc de données initiales reçu en entrée de la première couche ou bien un bloc de données intermédiaires généré par une couche en amont dans ladite succession de couches.

En particulier, les données de chaque bloc de données intermédiaires représentent un résultat intermédiaire du réseau de neurones.

Un niveau de profondeur est attribué à chaque couche du réseau de neurones. En particulier, la première couche de ladite succession de couches est considérée comme la couche la moins profonde du réseau de neurones et la dernière couche est considérée comme la couche la plus profonde du réseau.

Le réseau de neurones peut être un réseau de neurones séquentiel ou non. En particulier, le réseau de neurones peut comprendre certaines couches générant des données de sorties qui sont prises en entrée de plusieurs couches présentant des niveaux de profondeur différents dans le réseau de neurones.

Le circuit intégré CI comprend une mémoire volatile MV par exemple une mémoire RAM (pour « Random Access Memory » en anglais).

La mémoire volatile MV est configurée pour pouvoir enregistrer un code d'exécution du réseau de neurones ainsi qu'un programme permettant d'exécuter le réseau de neurones.

La mémoire volatile MV comprend également une zone, dite zone de mémoire globale (non-représenté à la figure 1), pouvant être allouée pour le stockage des données prises en entrée et les données générées en sortie de chaque couche du réseau de neurones.

Le circuit intégré CI comprend également une mémoire non-volatile MNV configurée pour enregistrer les différents paramètres définissant l'architecture d'un réseau de neurones, c'est-à-dire la configuration de ses couches et de ses poids.

Le circuit intégré CI comprend également une unité de traitement UT configurée pour déterminer la taille d'une zone mémoire globale à allouer pour pouvoir stocker l'ensemble des blocs de données intermédiaires dans la mémoire volatile MV lors de l'exécution du réseau de neurones. Pour cela, l'unité de traitement UT est couplée à la mémoire volatile MV, et est configurée pour déterminer la taille du bloc de données intermédiaires associé à une couche du réseau de neurones.

L'unité de traitement UT comprend par exemple un microprocesseur.

Lors de l'exécution du réseau de neurones, les couches sont exécutées dans un ordre défini selon l'architecture du réseau de neurones. Chaque couche génère ainsi un bloc de données intermédiaires une fois exécutée. Chaque bloc de données intermédiaires est alors placé, c'est-à-dire stocké, dans une zone allouée de la zone mémoire globale.

Afin d'optimiser le placement des blocs de données intermédiaires dans la zone mémoire globale de façon à minimiser la taille de cette zone mémoire globale, un procédé de détermination de placements des blocs de données intermédiaires est mis en œuvre avant l'exécution du réseau de neurones.

L'unité de traitement UT est configurée pour mettre en œuvre un tel procédé de détermination de placements des blocs de données intermédiaires.

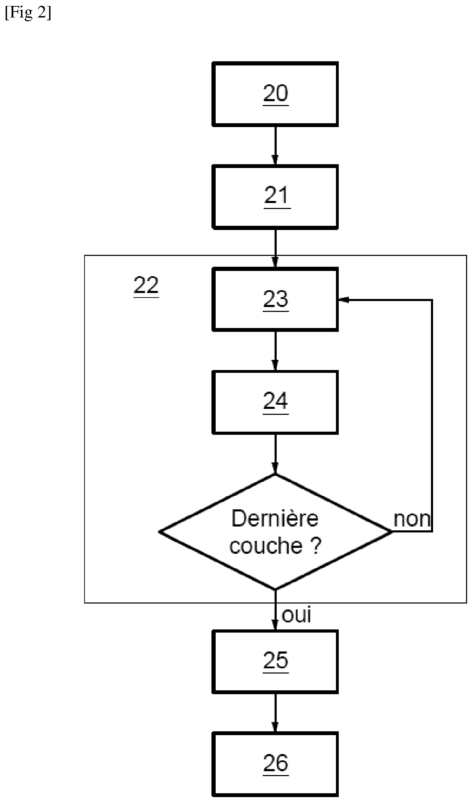

La figure 2 représente un diagramme de flux des différentes étapes conduisant à la détermination et à l'allocation de la taille de la zone mémoire globale comprenant l'ensemble des blocs de données intermédiaires.

L'étape 20 comprend la réception de l'architecture du réseau de neurones pour être stockée dans la mémoire non-volatile MNV.

L'unité de traitement UT est configurée pour extraire ladite architecture, c'est-à-dire la configuration des couches, des opérations entre les couches et des poids du réseau de neurones.

Le procédé comprend une étape 21 dans laquelle l'unité de calcul détermine, en fonction de l'architecture du réseau de neurones, quels sont les placements possibles des blocs de données intermédiaires générés par chaque couche dans la zone mémoire globale.

Certains placements peuvent entraîner une augmentation de la taille de la zone mémoire globale.

Les placements possibles des blocs de données intermédiaires sont choisis parmi plusieurs placements prédéterminés selon la configuration du réseau de neurones, notamment de l'ordre d'exécution de chaque couche.

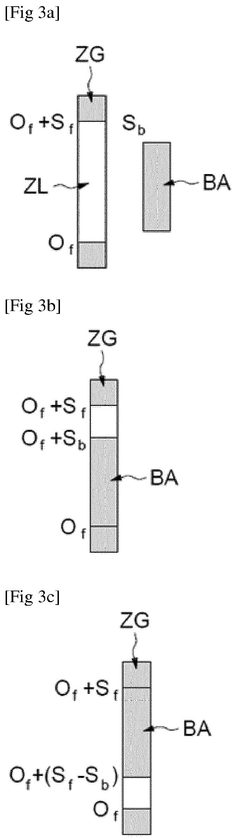

Par exemple, les placements représentés aux figures 3a, 3b et 3c consistent à placer un bloc de données intermédiaires BA dans une zone libre ZL de la zone mémoire globale ZG. Une zone libre ZL dans la zone mémoire globale peut être obtenue lorsqu'une zone utilisée pour stocker un bloc de données intermédiaires lors de l'exécution du réseau de neurones peut être désallouée. Plus particulièrement, une zone stockant un bloc de données intermédiaires peut être désallouée lors de l'exécution du réseau de neurones lorsque chaque couche prenant en entrée ce bloc de données intermédiaires a été exécutée.

Sur la figure 3b, le bloc de données intermédiaires BA est placé dans une partie inférieure de la zone libre ZL, et sur la figure 3c, le bloc de données intermédiaires BA est placé dans une partie supérieure de la zone libre ZL. Ces placements sont désignés dans la suite comme des placements d'interposition.

Un tel placement permet d'éviter d'augmenter la taille de la zone mémoire globale.

Les figures 4a, 4b, 4c, 4d représentent des placements de « superposition ».

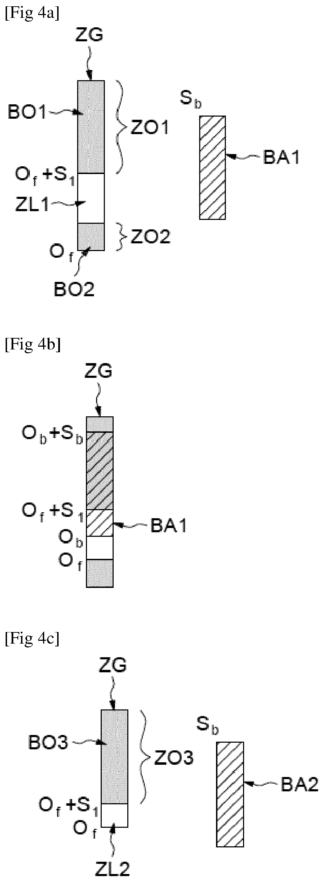

À la figure 4a, on cherche à placer un bloc de données intermédiaires BA1 généré en sortie d'une couche dans une zone mémoire globale ZG présentant une zone mémoire ZO1 dédiée au stockage d'un bloc de données intermédiaires BO1 pris en entrée de cette même couche.

Cette zone mémoire globale ZG présente également une zone libre ZL1 entre le bloc BO1 et une autre zone mémoire ZO2 dédiée au stockage d'un bloc de données intermédiaires BO2 d'une autre couche du réseau de neurones. Le bloc de données intermédiaires BA1 présente une taille sb. La zone libre ZL1 présente une taille s₁ et s'étend à partir d'une hauteur of jusqu'à une hauteur of+s₁. Comme les données du bloc de données intermédiaires BO1 pris en entrée ne sont pas réutilisées après le calcul des données du bloc de données intermédiaires BA1, il est possible lors de l'exécution du réseau de neurones de placer le bloc de données intermédiaires BA1 sur la zone ZO1, en écrasant une partie du bloc de données intermédiaires BO1 pris en entrée de la couche, et sur la zone libre ZL1, comme représenté sur la figure 4b. Le bloc de données intermédiaires BA1 s'étend alors à partir d'une hauteur o_{b} jusqu'à une hauteur o_{b}+s_{b}.

Par ailleurs, à la figure 4c, on cherche à placer un bloc de données intermédiaires BA2 généré en sortie d'une couche du réseau de neurones dans une zone mémoire globale ZG présentant une zone ZO3 utilisée pour stocker un bloc de données intermédiaires BO3 pris en entrée de cette même couche. En outre, cette zone mémoire globale ZG peut présenter également une zone libre ZL2 entre la zone ZO3 et une extrémité de la zone mémoire globale (ici l'extrémité inférieure de la zone mémoire globale). Le bloc de données intermédiaires BA2 présente une taille sb. La zone libre ZL présente une taille s₁ et s'étend à partir d'une hauteur o_{f} jusqu'à une hauteur o_{f}+s₁.

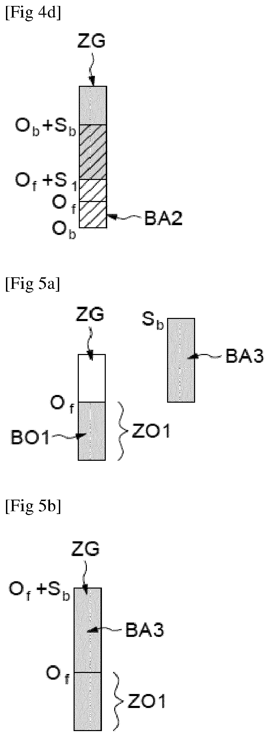

Ici, lors de l'exécution du réseau de neurones, les données du bloc de données intermédiaires BO3 pris en entrée ne sont pas réutilisées après le calcul des données du bloc de données intermédiaires BA2. Un placement possible consiste donc à placer lors de l'exécution du réseau de neurones, le bloc de données intermédiaires BA2 sur la zone ZO3, en écrasant une partie du bloc de données intermédiaires BO3 pris en entrée, et dans la zone libre ZL. Néanmoins, la taille de la zone mémoire globale est insuffisante pour pouvoir comprendre le bloc de données intermédiaires BA2. Ainsi, il est nécessaire d'augmenter la taille de la zone mémoire globale en définissant une nouvelle extrémité de la zone mémoire globale pour pouvoir placer le bloc de données intermédiaires BA2 dans la zone mémoire globale ZG, comme représenté à la figure 4d. L'extrémité inférieure qui était précédemment définie à une hauteur o_{f} est modifiée pour être définie à une hauteur o_{b}. Le bloc de données intermédiaires BA2 s'étend alors entre la hauteur o_{b} et la hauteur o_{b}+s_{b}.

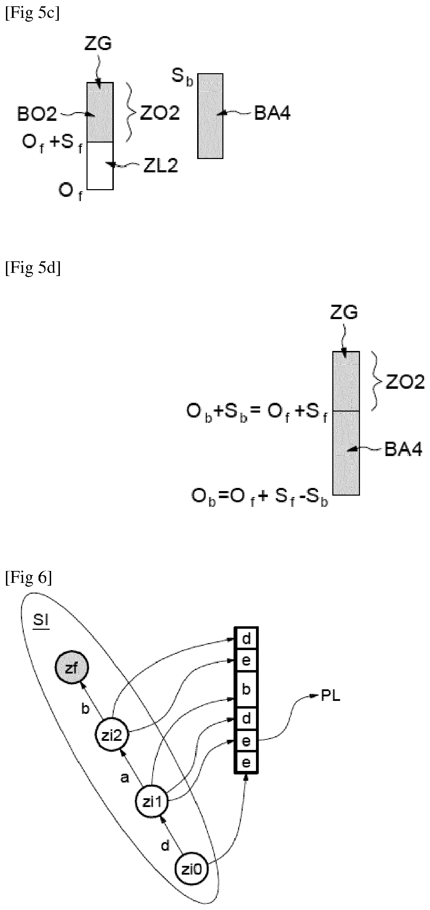

Les figures 5a, 5b, 5c, 5d représentent des placements de « allocation forcée ». Pour ces placements, la taille mémoire de la zone mémoire globale ZG est augmentée pour insérer le bloc de données intermédiaires.

En particulier, à la figure 5a, on cherche à placer un bloc de données intermédiaires BA3 généré en sortie d'une couche du réseau de neurones dans une zone mémoire globale ZG présentant au moins une zone ZO1 utilisée pour stocker un bloc de données intermédiaires BO1 d'une autre couche du réseau de neurones. La zone mémoire globale ZG peut présenter également une zone libre ZL1 entre la zone ZO1 et une extrémité supérieure de la zone mémoire globale. Le bloc de données intermédiaires BA3 présente une taille sb. La zone libre ZL présente une taille inférieure à s_{b}.

Ici, les données du bloc de données intermédiaires BO1 pris en entrée de la couche ne peuvent pas être écrasées. En outre la zone libre ZL n'est pas suffisamment grande pour placer l'ensemble du bloc de données intermédiaires BA3. Ainsi, un placement consiste à augmenter la taille de la zone mémoire globale ZG pour pouvoir placer le bloc de données intermédiaires BA en redéfinissant l'extrémité supérieure de la zone mémoire globale.

En particulier, à la figure 5b, la limite supérieure de la zone mémoire globale ZG est définie à la hauteur o_{f+}s_{b} de façon à placer le bloc de données intermédiaires BA3 en haut de la zone mémoire globale, c'est-à-dire entre la hauteur o_{f} et la hauteur o_{f}+s_{b}.

La zone mémoire globale de la figure 5c dans laquelle doit être placé le bloc de données intermédiaires BA4 diffère de celle de la figure 5a en ce qu'elle comprend une zone libre ZL1 entre un bloc de données intermédiaires ZO1 et une extrémité inférieure de la zone mémoire globale ZG.

Ainsi, à la figure 5b la limite inférieure de la zone mémoire globale ZG est définie à la hauteur o_{f}+s_{f}-s_{b} de façon à placer le bloc de données intermédiaires BA4 en bas de la zone mémoire globale ZG, c'est-à-dire entre la hauteur o_{f}+s_{f}-s_{b} et la hauteur o_{f}+s_{f}.

Par ailleurs, un ordre de priorité est avantageusement établi entre les différents placements possibles de chaque bloc de données intermédiaires. L'ordre de priorité le plus élevé est donné au placement considéré arbitrairement comme le plus optimisé. Par exemple, il peut être avantageux de considérer le placement d'interposition comme le plus optimisé devant le placement de superposition et le placement d'allocation forcé. Ce placement est considéré comme le plus optimisé pour un bloc de données pris isolément, mais peut ne pas être le plus optimisé lorsque la suite de placements est prise en considération dans son ensemble.

Les étapes suivantes du procédé permettent de déterminer une suite de placements de blocs de données intermédiaires permettant d'obtenir la zone mémoire globale de taille envisagée la plus petite. Chaque placement de la suite de placement correspond au placement d'un bloc de données intermédiaires d'une couche du réseau de neurones.

Le procédé comprend ainsi une élaboration 22 d'une suite initiale de placements des blocs de données intermédiaires générés par chacune des couches du réseau de neurones depuis la première couche jusqu'à l'avant- dernière couche du réseau de neurones. En d'autres termes on élabore une suite initiale de placements en déterminant couche par couche les placements des blocs de données intermédiaires générés par chaque couche depuis la couche la moins profonde du réseau de neurones jusqu'à la couche la plus profonde.

À l'étape 23, chaque placement de la suite initiale est sélectionné parmi lesdits plusieurs placements possibles du bloc de données intermédiaires à placer. En particulier, le placement sélectionné est celui dont l'ordre de priorité est le plus élevé par rapport aux autres placements possibles du bloc de données intermédiaires à placer.

Au cours de l'élaboration de la suite initiale, la taille de la zone mémoire globale ZG est calculée et mise à jour pour chaque placement sélectionné. En outre, les tailles de la zone mémoire globale ZG qui auraient pu être obtenues si les autres placements parmi les placements possibles avaient été choisis sont également calculées.

La suite initiale permet de définir une taille envisagée de ladite zone mémoire globale. En particulier, la taille envisagée de ladite zone mémoire globale est la taille obtenue par le dernier placement sélectionné.

Cette suite initiale est définie comme une suite candidate pour une allocation mémoire pour le stockage des blocs de données intermédiaires lors de l'exécution du réseau de neurones.

Le procédé comprend également une mémorisation 24 des placements non sélectionnés pour les blocs de données intermédiaires de chaque couche. Les tailles de la zone mémoire globale qui auraient pu être obtenues si les autres placements parmi les placements possibles avaient été choisis sont également mémorisées.

Plus particulièrement, les placements non sélectionnés sont mémorisés dans une pile PL selon leur ordre de priorité et la profondeur dans le réseau de neurones de la couche à laquelle ils sont associés. Ainsi, les placements non sélectionnés de la première couche du réseau de neurones sont mémorisés en bas de la pile et les placements de la dernière couche sont mémorisés en haut de la pile.

Un exemple d'élaboration d'une suite initiale SI et de mémorisation est représenté à la figure 6. Dans cet exemple, la suite initiale SI comprend trois placements. Au début de l'élaboration, la zone mémoire globale présente une taille initiale zi₀

En particulier, pour un premier bloc de données intermédiaires, deux placements sont possibles : d et e. Comme le placement d présente un ordre de priorité plus important que le placement e, ce placement d est sélectionné pour ce premier bloc de données intermédiaires. Ce placement d nécessite une taille zi₁ pour la zone mémoire globale. La taille de la zone mémoire est donc mise à jour pour être égale à la taille zi₁. Le placement e est alors mémorisé dans la pile PL ainsi que la taille de la zone mémoire globale qui aurait pu être obtenue en choisissant ce placement.

Ensuite, le procédé détermine le placement pour le deuxième bloc de données intermédiaires. Pour ce bloc de données intermédiaires, quatre placements sont possibles : a, b, d et e. Comme le placement a présente un ordre de priorité plus important que les placements b, d et e, le placement a est choisi pour ce deuxième bloc de données intermédiaires. Ce placement nécessite une taille zi2 pour la zone mémoire globale. Les placements b, d et e sont alors mémorisés selon leur ordre de priorité dans la pile PL ainsi que les tailles de la zone mémoire globale qui auraient pu être obtenues en choisissant ces placements.

Puis, le procédé détermine le placement pour le troisième bloc de données intermédiaires. Pour ce bloc de données intermédiaires, trois placements sont possibles : b, d et e. Comme le placement b présente un ordre de priorité plus important que les placements d et e, le placement b est choisi pour ce troisième bloc de données intermédiaires. Ce placement nécessite une taille zf pour la zone mémoire globale. Les placements d et e sont alors mémorisés dans la pile PL ainsi que les tailles de la zone mémoire globale qui auraient pu être obtenues en choisissant ces placements.

Un placement ayant été sélectionné pour l'ensemble des blocs de données intermédiaires, la suite initiale est alors complète. Ainsi, la taille zf est désignée comme taille envisagée de la zone mémoire globale pour cette suite initiale de placements.

La suite initiale peut ne pas être la suite de placements la plus optimisée, c'est-à-dire la suite de placements permettant de minimiser la taille de la zone mémoire globale. En particulier, un placement qui peut être choisi arbitrairement comme le plus optimisé peut ne pas être le placement qui permettra finalement de réduire au mieux la taille de la zone mémoire globale.

Ainsi, comme représenté à la figure 2, le procédé comprend une élaboration 25 d'au moins une suite modifiée de placements par rapport à ladite suite initiale à partir d'un placement donné de ladite suite initiale. L'élaboration de cette suite modifiée comprend une modification du placement donné par un placement non sélectionné mémorisé dans la pile. Ce placement non sélectionné et le placement donné sont associés au même bloc de données intermédiaires.

De préférence, la suite modifiée est élaborée en tenant compte de l'ordre des placements dans la pile.

En particulier, le placement en haut de la pile est le placement choisi pour modifier le placement de la suite initial associé au même bloc de données intermédiaires. Ce placement utilisé pour modifier la suite initiale est ensuite supprimé de la pile.

La suite modifiée est identique à la suite initiale jusqu'au placement remplacé par le placement du haut de la pile. En d'autres termes, les placements de la suite initiale des blocs de donnés associés à une couche moins profonde que celle associée aux blocs de données intermédiaires dont le placement a été modifié sont conservés dans la suite modifié.

Ensuite, on sélectionne des placements pour les blocs de donnés des couches suivantes.

Une fois que toutes les couches sont traitées et qu'un placement a été déterminé pour chaque bloc de données intermédiaires, la suite modifiée est alors complète.

En particulier, on sélectionne les placements des blocs de données intermédiaires parmi les placements possibles pour ces blocs de données intermédiaires en fonction de l'ordre de priorité établi.

De même que pour la suite initiale, les placements non sélectionnés sont mémorisés ainsi que les tailles de la zone mémoire globale qui auraient pu être obtenues si ces placements avaient été sélectionnés.

Ensuite, le procédé peut élaborer d'autres suites modifiées à partir de la suite initiale. En particulier, pour chaque nouvelle suite modifiée à élaborer, on conserve les placements de la suite initiale jusqu'au placement associé au bloc de données intermédiaires auquel le placement placé en haut de la pile est associé. Ce placement est remplacé par le placement placé en haut de la pile. Puis de même que précédemment, on sélectionne des placements pour les blocs de donnés intermédiaires des couches suivantes et les placements non sélectionnés sont mémorisés ainsi que les tailles de la zone mémoire globale qui auraient pu être obtenues si ces placements avaient été sélectionnés.

De préférence des suites modifiées sont élaborées jusqu'à ce que la pile soit vide.

Ainsi, le procédé permet d'élaborer plusieurs suites de placements à partir de la suite de placements initiale. À titre d'illustration, un exemple de suites de placements est représenté à la figure 7a. Dans cet exemple, la suite de placement SI est la suite initiale. En particulier, plusieurs suites de placements modifiées sont élaborées dont une suite modifiée SM. Cette suite modifiée SM permet d'obtenir une taille de zone mémoire globale réduite par rapport à la suite initiale SI. Cette suite modifiée devient donc la nouvelle suite candidate NSC.

L'élaboration de plusieurs suites modifiées permet de tester différents placements possibles de façon à déterminer une suite de placements optimale, c'est-à-dire la suite de placements permettant de minimiser la taille envisagée de la zone mémoire globale.

En particulier, chaque suite modifiée peut être définie comme une nouvelle suite candidate remplaçant la précédente suite candidate si la taille envisagée de ladite zone mémoire globale obtenue par cette suite modifiée est inférieure à la taille envisagée de ladite zone mémoire globale de la précédente suite candidate.

Le procédé comprend donc pour chaque suite modifiée complète une comparaison entre la taille envisagée de la zone mémoire globale obtenue par cette suite modifiée complète et celle obtenue par la suite candidate. Si la taille envisagée de la zone mémoire globale obtenue par cette suite modifiée complète est inférieure à celle définie par la suite candidate, la suite modifiée complète devient la nouvelle suite candidate.

Ainsi, la suite de placements qui est la suite candidate lorsque la pile devient vide est celle sélectionnée pour une allocation des blocs de données intermédiaires lors de l'exécution du réseau de neurones. Cette suite candidate est choisie, à l'étape 26, comme la suite de placements la plus optimisée.

Préférablement, comme représenté à la figure 7b, avant d'élaborer une suite modifiée, les placements de la pile impliquant une augmentation de la taille de la zone mémoire globale à une taille supérieure à la taille envisagée de la zone mémoire globale obtenue avec la suite candidate sont supprimés de la file de façon à éviter d'élaborer des suites modifiées à partir de ces placements. Cette suppression permet ainsi d'accélérer l'exécution du procédé.

En outre, comme représenté à la figure 7b, de préférence, avant d'élaborer une suite modifiée, les placements de la pile associés à un même bloc de données intermédiaires sont arrangés selon les tailles de la zone mémoire globale qui auraient été obtenues si ces placements avaient été sélectionnés précédemment. En particulier, le placement permettant d'obtenir la taille de la zone mémoire globale la plus petite par rapport aux autres placements associés au même bloc de données intermédiaires est placé dans la pile au-dessus de ces autres placements.

D'autres arrangements de la pile sont possibles. En particulier, il est possible d'arranger les placements dans la pile en prenant en compte la proximité de ce placement par rapport à l'exécution de la dernière couche du réseau de neurones. Un tel arrangement permet d'obtenir une exécution plus rapide du procédé.

Il est également possible d'arranger, comme décrit précédemment, les placements selon les tailles de la zone mémoire globale qui auraient été obtenues, et en prenant également en compte la proximité du placement par rapport à l'exécution de la dernière couche du réseau de neurones en cas d'égalité de taille de mémoire globale entre au moins deux placements de la pile.

Il est également possible de limiter la taille de la pile afin d'accélérer le procédé. Plus la taille de la pile est petite, plus il existe un risque que la suite de placements la plus optimisée ne soit pas trouvée. Ainsi, de préférence, la taille de la pile sera limitée à un nombre de placements compris entre 1 et 100, plus particulièrement entre 1 et 50, de préférence entre 1 et 30.

Une fois que la suite de placements considérée comme la plus optimisée est déterminée, le réseau de neurones peut être exécuté.

Au lancement de l'exécution du réseau de neurones, l'unité de traitement UT est configurée pour allouer ladite zone mémoire globale dans la mémoire volatile MV, la taille de cette zone mémoire globale étant égale à la taille envisagée obtenue par la suite de placements considérée comme la plus optimisée.

Une fois la zone mémoire globale allouée, l'unité de traitement UT est configurée pour calculer les adresses absolues de chaque placement des blocs de données intermédiaires de la suite de placements considérée comme la plus optimisée, puis à placer lesdits blocs de données intermédiaires conformément à ces placements.

Par « adresse absolue », on entend l'adresse de l'emplacement du bloc de données intermédiaires sélectionnée dans la zone mémoire globale destinée à stocker les blocs de données intermédiaires du réseau de neurones.

Le procédé de détermination de placements de blocs de données intermédiaires permet de trouver le meilleur placement pour chaque bloc de données intermédiaires pour minimiser la taille de la zone mémoire globale.

En minimisant la taille de la zone mémoire globale, le procédé de détermination de placements permet d'utiliser un circuit intégré présentant une mémoire de taille réduite. Un tel procédé permet donc l'utilisation de circuits intégrés peu coûteux.

## Revendications

1. Procédé de détermination, pour une allocation mémoire, de placements dans une zone mémoire globale de blocs de données, dits blocs de données intermédiaires, générés par chacune des couches d'un réseau de neurones artificiel, le procédé comprenant :
- une définition (20) de plusieurs placements possibles des blocs de données intermédiaires de chaque couche dans la zone mémoire globale,
- une élaboration (21) d'une suite initiale de placements des blocs de données intermédiaires de chaque couche depuis la première couche jusqu'à la dernière couche du réseau de neurones, chaque placement de la suite initiale étant sélectionné (22) parmi lesdits plusieurs placements possibles du bloc de données intermédiaires à placer, ladite suite initiale permettant de définir une taille envisagée de ladite zone mémoire globale, ladite suite initiale étant définie comme une suite candidate,
- une mémorisation (23) des placements non sélectionnés pour les blocs de données intermédiaires de chaque couche,
- une élaboration (24) d'au moins une suite de placements modifiée par rapport à ladite suite initiale à partir d'un placement donné de ladite suite initiale, l'élaboration de cette suite modifiée comprenant une modification du placement donné par un placement non sélectionné mémorisé,
si la taille envisagée de ladite zone mémoire globale obtenue par cette suite modifiée est inférieure à la taille envisagée de ladite zone mémoire globale de la suite candidate, alors cette suite modifiée devient la suite candidate,
les placements des blocs de données intermédiaires pour l'allocation mémoire étant ceux de la suite de placements, dite suite choisie, définie comme la suite candidate une fois que chaque suite modifiée a été élaborée.

2. Procédé selon la revendication 1, dans lequel un ordre de priorité est attribué à chaque placement possible pour chaque bloc de données intermédiaires, la sélection du placement de chaque bloc de données intermédiaires pour l'élaboration de la suite initiale étant effectué selon l'ordre de priorité du placement.

3. Procédé selon la revendication 2, dans lequel les placements non sélectionnés pour la suite initiale sont mémorisés de bas en haut dans une pile (PL) selon leur ordre de priorité pour chaque bloc de données intermédiaires.

4. Procédé selon la revendication 3, dans lequel chaque suite modifiée est élaborée de sorte qu'elle conserve les mêmes placements que ceux de la suite initiale jusqu'au placement associé au même bloc de données intermédiaires que le placement placé en haut de la pile (PL), ce placement de la suite principal étant remplacé par le placement placé en haut de la pile (PL) qui est ensuite supprimé de la pile (PL), les placements des blocs de données intermédiaires des couches suivantes de la suite modifiée étant sélectionnés parmi les placements possibles pour ces blocs de données intermédiaires, les placements non sélectionnés étant mémorisés dans la pile (PL).

5. Procédé selon la revendication 4, dans lequel des suites modifiées sont élaborées jusqu'à ce que la pile (PL) soit vide.

6. Procédé selon l'une quelconque des revendications 4 ou 5, dans lequel pour chaque placement mémorisé dans la pile (PL) est associée la taille de la zone mémoire globale qui aurait pu être obtenue par ce placement s'il avait été sélectionné parmi les différents placement possible d'un bloc de données intermédiaires.

7. Procédé selon la revendication 6, comprenant, avant chaque élaboration d'une suite modifiée, une comparaison entre la taille de zone mémoire globale associée à chaque placement de la pile (PL) et la taille envisagée de la zone mémoire globale obtenue pour la suite candidate, puis une suppression dans la pile (PL) des placements associés à une taille de zone mémoire globale supérieure à ladite taille envisagée.

8. Procédé selon l'une quelconque des revendications 6 ou 7, comprenant, avant chaque élaboration d'une suite modifiée, une organisation des placements de la pile (PL) associés à un même bloc de données intermédiaires selon la taille de zone mémoire globale qui leur est associée et selon un ordre d'exécution de ces placements.

9. Procédé selon l'une des revendications 3 à 8 dans lequel la pile (PL) présente une taille limitée.

10. Procédé selon l'une des revendications 1 à 9, dans lequel une zone de la zone mémoire globale choisie pour un placement d'un bloc de données intermédiaires est considérée comme libérée dès que les placements de blocs de données de toutes les couches prenant en entrée le bloc de données intermédiaires placé dans ladite zone ont été sélectionnés.

11. Procédé selon la revendication 10, dans lequel un placement défini d'un bloc de données intermédiaires consiste à placer le bloc de données intermédiaires dans une zone libre de la zone mémoire globale.

12. Procédé selon l'une des revendications 1 à 11, dans lequel un placement défini d'un bloc de données intermédiaires généré par une couche consiste à superposer ce bloc de données intermédiaires sur un bloc de données intermédiaires pris en entrée de cette même couche.

13. Procédé selon l'une des revendications 1 à 12, dans lequel un placement défini d'un bloc de données intermédiaires consiste à augmenter la taille mémoire de la zone mémoire globale pour insérer le bloc de données intermédiaires.

14. Procédé d'allocation d'une taille mémoire globale, dans lequel ladite taille mémoire globale est choisie pour être égale à la taille envisagée obtenue par la suite choisie définie par un procédé selon l'une des revendications 1 à 13 puis la mémoire est allouée selon les placements successifs déterminés.

15. Circuit intégré configuré pour recevoir un réseau de neurones artificiel multicouches, et comprenant :
- une mémoire (MV) configurée pour mémoriser des blocs de données intermédiaires générés par chacune des couches du réseau de neurones dans une zone, dite zone mémoire globale, et
- une unité de traitement (UT) configurée pour mettre en œuvre un procédé, selon l'une des revendications 1 à 13, de détermination de placements desdits blocs de données intermédiaires dans ladite zone mémoire globale, puis un procédé d'allocation selon la revendication 14 lors d'une exécution du réseau de neurones.
